# EUROPÄISCHE PATENTSCHRIFT

(11) **EP 2 359 460 B1**
(45) Veröffentlichungstag und Bekanntmachung des Hinweises auf die Patenterteilung: **09.01.2013**
(21) Anmeldenummer: 09745072.0
(22) Anmeldetag: 06.11.2009
(51) Int. Cl.: H02K 29/03, H02K 1/27

(54) **ELEKTRISCHE MASCHINE**
ELECTRIC MACHINE
MOTEUR ÉLECTRIQUE

(30) Priorität: 14.11.2008 DE 102008043739
(43) Veröffentlichungstag der Anmeldung: 24.08.2011
(73) Patentinhaber: Robert Bosch GmbH, 70442 Stuttgart (DE)
(72) Erfinder: WILHARM, Torsten, 77833 Ottersweier (DE)
(86) Internationale Anmeldenummer: PCT/EP2009/064771
(87) Internationale Veröffentlichungsnummer: WO 2010/054992

(56) Entgegenhaltungen:
- EP-A1- 1 450 462
- EP-A1- 1 542 335
- JP-A- 56 083 252
- JP-A- 2008 048 517
- US-B1- 6 242 837

## Beschreibung

Die Erfindung betrifft eine elektrische Maschine enthaltend einen Rotor und einen Stator, wobei in der Umfangsfläche des Rotors und/oder des Stators zumindest zwei Ausnehmungen angeordnet sind.

Bei bürstenlosen Gleichstrommotoren oder bei permamentmagnetisch erregten Synchronmaschinen entsteht im unbestromten Fall ein störendes Rastmoment, da die Ankerzähne von den Magneten angezogen werden. Aufgrund des Rastmomentes kann der Motor nicht in jeder beliebigen Ruheposition zum Stillstand gebracht werden.

Zur Reduzierung des störenden Rastmoments ist aus der EP 1 542 335 A1 bekannt, in den Rotor gleichmäßig verteilte Ausnehmungen einzubringen, um den magnetischen Fluss im Rotor stören. Dadurch kann das störende Rastmoment reduziert werden. Jedoch tritt auch eine unerwünschten Reduzierung des mittleren Drehmomentes im bestromten Fall auf. Weiterhin kann eine solche Anordnung der Ausnehmungen das Rastmoment nur in eingeschränktem Maße reduzieren. Die Reduzierung der Rastmomente über verschiendene Ausnehmungen ist ebenfalls Gegenstand weiterer Dokumente, wie z.B. US 624 837, JP 2008098517, EP1450462, EP1542335.

Es ist daher Aufgabe der Erfindung, eine verbesserte Reduktion des Rastmoments ohne nennenswerte Beeinträchtigung des Nutzmoments zu erreichen.

Diese Aufgabe wird durch eine elektrische Maschine gemäß Anspruch 1 gelöst.

### Offenbarung der Erfindung

Erfindungsgemäß wurde erkannt, dass das störende Rastmoment, das dadurch entsteht, dass die Ankerzähne von den Magneten angezogen werden, deutlicher reduziert werden kann als etwa mit der vorgeschlagenen Lösung nach EP 1 542 335 A1 und dies bei gleichzeitiger geringerer Beeinträchtigung des Nutzmomentes, wenn die gemäß dem Stand der Technik vorgeschlagene Ausnehmungen unregelmäßig auf der Umfangsfläche verteilt werden. Unter der unregelmäßigen Anordnung von wenigstens zwei Ausnehmungen ist im Sinne dieser Erfindung zu verstehen, dass der eingeschlossene Winkel zwischen zwei benachbarten Ausnehmungen und der Drehachse ungleich dem eingeschlossenen Winkel zwischen zwei weiteren benachbarten Ausnehmungen und der Drehachse ist.

Unter einer Ausnehmung ist im Sinne der Erfindung ist ein Flächenbereich im Querschnitt des Rotors und/oder des Stators zu verstehen, welcher entweder materialfrei ist oder ein anderes Material enthält, als der umgebende Rotor bzw. Stator. Die Form der Ausnehmung kann zur Reduktion des Rastmoments im Querschnitt optimiert werden. Beispielsweise kann die Höhe, die Breite oder der Verlauf der Begrenzungslinien angepasst werden. Der Querschnitt kann sich entlang der Längserstreckung der Ausnehmnung ändern. Die Ausnehmung kann an der Oberfläche des Rotors nach Art einer Nut offen sein, oder von einer Materiallage des Rotor materials überdeckt sein, sodass sich ein zur Umfangsfläche geschlossener Hohlraum ergibt.

In einer bevorzugten Weiterbildung der Erfindung sind wenigstens zwei Ausnehmungen in verschiedener Form ausgeführt. Dies hat den Vorteil, dass unterschiedliche Ordnungen des Rastmoments ausgeglichen werden können und gleichzeitig dabei das Nutzmoment geringer beeinträchtigt wird. Unter Form im Sinne der Erfindung wird die Kontur und der Querschnitt eines Körpers oder einer Ausnehmung z.B. einer Nut verstanden. Unter verschieden wird im Sinne der Erfindung verstanden, wenn ein Ausnehmungsmuster im Vergleich zu einem anderen Ausnehmungsmuster entweder verdreht ist, sich in der Anzahl der Ausnehmungen unterscheidet oder die Verteilung der Ausnehmungen ein unterschiedliches Muster aufweist.

In einer weiteren Ausführungsform der Erfindung sind die Ausnehmungen in gleicher Form ausgeführt. Auf diese Weise können die Ausnehmungen einfacher mit Füllstoffen verschlossen werden als bei Ausnehmungen mit verschiedener Form. Unter Füllstoffen im Sinne der Erfindung werden Materialien verstanden, die in eine Ausnehmnung eingebracht werden, um deren Querschnitt und/oder deren Kontur zu verändern.

In einer weiteren Ausführungsform der Erfindung sind Ausnehmungen im Rotor und/oder Stator als Hohlräume im Material ausgeführt, d.h. die Ausnehmungen sind zur Umfangsfläche des Rotors mit einer Materiallage überdeckt. Je näher die Hohlräume an der Umfangsfläche des Rotors und/oder des Stators angeordnet sind, um so effektiver wird der magnetische Fluss gestört. Eine Störung des magnetischen Flusses wird angenommen, wenn der Abstand zwischen Ausnehmung und der Rotoroberfläche kleiner oder gleich dem dreifachen Wert der Höhe oder Breite der Ausnehmung ist. Dies hat den Vorteil, dass die Außenkontur glatt ist und Planschverluste reduziert werden können.

In einer weiteren Ausführungsform der Erfindung ist zumindest eine Ausnehmung im Rotor und/oder Stator zumindest teilweise mit zumindest einem Füllmaterial aufgefüllt, welches ein diamagnetisches oder paramagnetisches Material enthält. Als Füllstoffe eignen sich insbesondere Kunststoffe, z.B. Epoxidharze, oder Metalle oder Legierungen, welche z.B. Aluminium oder Magnesium enthalten. Auf diese Weise können die Schallemissionen, sogenannte "Sireneneffekte", einer elektrischen Maschine reduziert werden.

In einer weiteren Ausführungsform der Erfindung sind die Ausnehmungen im Rotor und/oder im Stator im wesentlichen parallel zur Drehachse des Rotors angeordnet. Auf diese Weise können die Ausnehmungen in der Produktion auf einfache Weise eingebracht werden z.B. durch Stanzen. Eine im wesentlichen achsparallele Anordnung wird insbesondere angenommen, wenn die Drehachse und die Ausnehmungen einen Winkel von weniger als 5°, insbesondere weniger als 2° einschließen.

In einer weiteren Ausführungsform der Erfindung weist die Umfangsfläche des Rotors und/oder des Stators zumindest einen ersten Abschnitt auf, in welchem die Ausnehmungen in einer unregelmäßigen ersten Verteilung angeordnet sind und zumindest einen zweiten Abschnitt, in welchem die Ausnehmungen in einer unregelmäßigen zweiten Verteilung angeordnet sind und welche von der ersten Verteilung verschieden ist. Dies hat den Vorteil, dass zur Abdeckung unterschiedlicher Rastmomentordnungen die Anordung der Ausnehmungen in beiden Bereichen bestimmten, vorzugsweise unterschiedlicher Rastmomentordungen angepasst werden kann. Auf diese Weise können einfach Rastmomentordungen reduziert werden, welche eine herstellungstechnisch sehr aufwendige Ausnehmungsmuster aufweisen, sofern sie in einem Abschnitt auf dem Rotor und/oder Stator zusammengefasst wären.

Nachfolgend wird die Erfindung anhand von Figuren ohne Beschränkung des allgemeinen Erfindungsgedankens näher erläutert. Dabei zeigt:
Fig. 1 eine Schnittansicht einer erfindungsgemäßen elektrischen Maschine gemäß einer ersten Ausführungsform der Erfindung,
Fig. 2 eine Ansicht eines erfindungsgemäßen Rotors einer elektrischen Maschine gemäß der ersten Ausführungsform der Erfindung,
Fig. 3 eine Schnittansicht eines Rotors einer erfindungsgemäßen elektrischen Maschine gemäß einer zweiten Ausführungsform der Erfindung,
Fig. 4 eine Ansicht eines Rotors einer erfindungsgemäßen elektrischen Maschine gemäß einer dritten Ausführungsform der Erfindung.

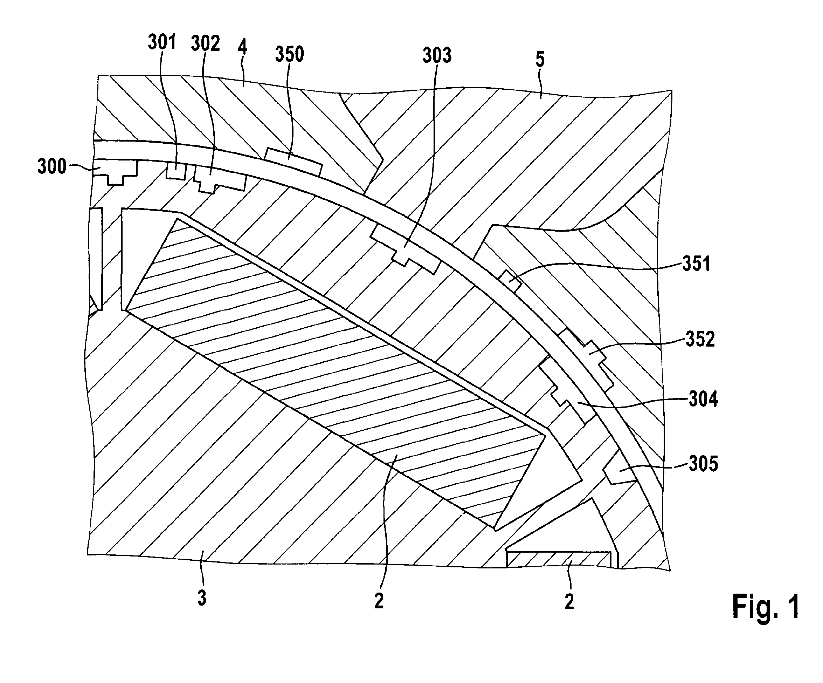

Fig. 1 zeigt einen Ausschnitt eines Querschnittes durch eine erfindungsgemäße elektrische Maschine. Diese beinhaltet einen Stator 4 und einen Rotor 3, dessen Drehachse nicht dargestellt ist. Der Stator 4 umgibt den Rotor 3 und beinhaltet beispielhaft eine Induktionsspule 5, welche zusammen mit weiteren, nicht dargestellten Induktionsspulen Magnetfelder erzeugt. Der Rotor 3 beinhaltet Permanentmagnete 2, welche ein magnetisches Multipolfeld erzeugen.

Die Magnete 2 haben beispielhaft einen quaderförmigem Querschnitt und sind innerhalb des Rotors so eingebaut, dass sie an der Oberfläche des konzentrischen Rotors 3 nicht sichtbar sind. Sie werden bevorzugt nahe der Umfangsfläche angeordnet. Zur Herstellung von (Permanent-) Magneten 2 werden Legierungen verwendet die z.B. Eisen, Nickel oder Kobalt enthalten und mit Zusätzen versehen werden können. Die Werkstoffe werden z.B. gesintert und anschließend durch externe Magnetfelder magnetisiert.

Die Drehmomentausbildung einer elektrischen Maschine geschieht elektromagnetisch durch die Kopplung der Magnetfelder des Rotors und des Stators. Maßgebend dafür ist der Strombelag der Wicklung, die den Laststrom führt, und die magnetische Flussdichte im Luftspalt zwischen Stator 4 und Rotor 3. Durch die lokale Vergrößerung des Luftspalts durch die Einbringung von Ausnehmungen in Rotor 3 und/oder Stator 4 wird der magnetische Fluss lokal reduziert. Dies bewirkt ein geändertes Anzugsverhalten zwischen Ankerzahn und Magnet, was ein geändertes Rastmoment zur Folge hat. Dieser Effekt wird in dieser Erfindung ausgenutzt, um das störende Rastmoment zu beeinflussen.

Die Ausnehmungen 300 - 352 sind unregelmäßig entlang des Umfangs des Rotors 3 und/oder des Stators 4 angeordnet und in ihrer Form verschieden zueinander, um unterschiedliche Ordnungen des Rastmoments abzuschwächen.

Sowohl die Positionen als auch die Formen der Ausnehmungen werden in einem iterativen, mehrfach zu durchlaufende Rechen- und Testprozess entwickelt und sind je nach Bauart der elektrischer Maschine, der geforderten Rastmomentreduktion und der tolerierbaren Reduktion des Nutzmoments unterschiedlich. Die Ausnehmungen können dabei unterschiedlich je nach Aufbau des Rotors in diesen eingebracht werden z.B. durch Fräsen, Stanzen oder Pressen.

Der Stator 4 zeichnet sich dadurch aus, dass er das feststehende Element einer elektrischen Maschine ist und dabei oftmals direkt mit dem Gehäuse der elektrischen Maschine verbunden ist. Der Aufbau des Stators 4 ist gekennzeichnet durch den Einbau von wenigstens zwei Induktionsspulen 5, von welchen eine in Fig. 1 dargestellt ist. Diese ist ebenso wie die Magnete möglichst nahe an der zur Drehachse des Rotors 3 konzentrischen Oberfläche der Innenseite des Stators 4 angeordnet. Der Stator 4 ist beispielhaft mit Füllmaterial ausgefüllt, z.B. Eisenblech zum Leiten des magnetischen Feldes. Durch eine beispielhafte Ansteuerung der Induktionsspulen 5 mittels Drehstrom oder einer angepassten Ansteuerung mittels einer elektronischen Kommmutierung ist es möglich, ein rotierendes magnetisches Feld aufzubauen.

Im dargestellten Beispiel weist der Stator 4 auf den dem Rotor 3 gegenüberstehenden Flächen Ausnehmungen 350 - 352 auf, die entlang des Umfangs unregelmäßig verteilt sind und in ihrer Form verschieden sind. Da das Rastmoment durch Anziehung eines Ankerzahns durch einen Magneten entsteht, sind die Ausnehmungen 300 - 352 sowohl auf den dem Rotor und auf den gegenüberüberstehenden Flächen des Stators 4 entlang des Umfangs angebracht.

In einer weiteren Ausführungsform weist entweder der Rotor 3 oder der Stator 4 unregelmäßig entlang des Umfangs verteilte Ausnehmungen 300 - 352 auf. Diese Bauweise reduziert das störende Rastmoment ebenso.

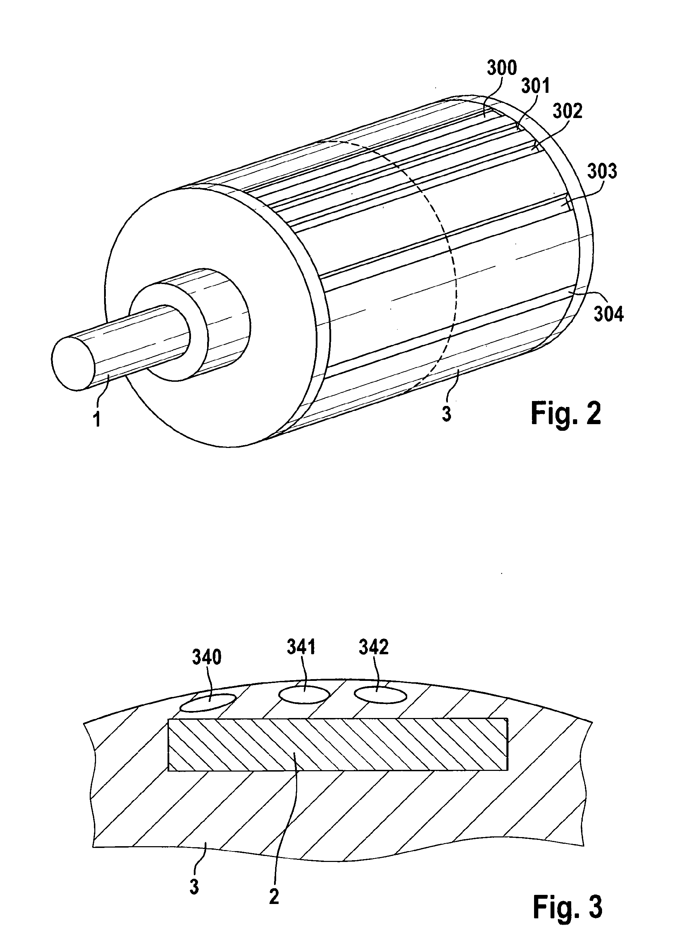

In Fig. 2 ist eine 3D-Darstellung eines Rotors 3 einer erfindungsgemäßen elektrischen Maschine dargestellt. Der Rotor 3 mit einer zylindrischen Grundform weist dabei eine Rotorwelle 1, welche in der Symmetrieachse liegt, und eine Mehrzahl von Ausnehmungen 300 - 304 entlang der Umfangsfläche auf. Die Ausnehmungen 300 - 304 sind unregelmäßig entlang des Umfangs verteilt und weisen einen unterschiedlichen Querschnitt auf. Sie sind im wesentlich parallel zur Drehachse des Rotors angeordnet. Die Magnete sind in dem Rotorgehäuse integriert und sind von außen nicht erkennbar.

Zur Herstellung des oben beschriebenen Rotors 3 werden Elektrobleche auf einer Rotorwelle 1 aufgefädelt. Die Form der Bleche bildet dabei den Querschnitt des Rotors ab. Die Bleche verfügen über Hohlräume, die mindestens zwei Magnete 2 aufnehmen. Die Magnete werden z.B. durch Klipsen, Kleben oder Pressen in den Blechen befestigt. Die Elektrobleche werden durch beispielsweise Nuten oder Aufpressen an der Rotorwelle befestigt. Die rotationssymmetrische Grundform des dargestellten Rotors 3 wird durch die Ausnehmungen 300 - 304 gestört. Diese Ausnehmungen 300 - 304 können in die Elektrobleche z.B. durch Stanzen, Fräsen oder Pressen eingebracht werden und offen zur Oberfläche des Rotors in Erscheinung treten oder mit Füllmaterial versehen sein. Als Füllmaterial eignen sich insbesondere Kunststoffe, z.B. Epoxidharze. In einer weiteren Ausführungsform könmnen Metalle oder Legierungen verwendet werden, welche z.B. Aluminium oder Magnesium enthalten.

Fig. 3 zeigt einen Ausschnitt eines Querschnittes eines Rotors 3 gemäß einer weiteren Ausführungsform einer elektrischen Maschine. Der zylindrische Rotor 3 beinhaltet einen nahe der Rotorumfangsfläche montierten quaderförmigen Magneten 2 und Ausnehmungen 340 - 342, die als Hohlräume ausgeführt sind und zwischen dem Magneten 2 und der Rotoroberfläche eingebracht sind. Im dargestellten Fall sind die Hohlräume nicht mit festem Füllmaterial versehen. Die Ausgestaltung der Hohlräume kann als Ausnehmung angesehen werden, die zur Umfangsfläche mit Material bedeckt ist. Diese Hohlräume beeinflussen ähnlich einer offenen Ausnehmung den magnetischen Fluss im Material, ohne die mit einer offenen Nut verbundenen Nachteile aufzuweisen, wie z.B. Planschverluste oder Sireneneffekte.

Eine Füllung mit einem Füllmaterial wie in Fig. 2 beschieben ist ebenso in einer weiteren Ausführungsform möglich. Dies kann z.B. in Stangenform ähnlich wie die der Magnete 2, beim Auffädeln der Elektrobleche auf die Rotorwelle 1 eingebracht werden. Entstehende Unwuchten durch die unregelmäßige Verteilung von Ausnehmungen können durch die Auswahl unterschiedlicher Füllmaterialien mit unterschiedlicher Dichte ausgeglichen werden.

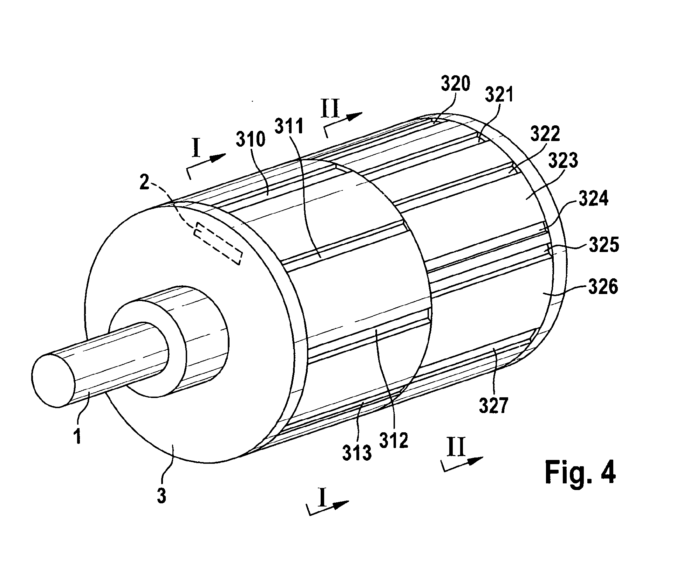

Fig. 4 zeigt eine schematische 3D-Darstellung eines zylindrischen Rotors 3 einer erfindungsgemäßen elektrischen Maschine mit einer Rotorwelle 1 und den in den Rotor 3 eingebrachten quaderförmigen Magneten 2, von denen einer beispielhaft dargestellt ist. Die Anordnung der Magnete ist im wesentlichen parallel zur Drehachse des Rotors 3. Die Umfangsfläche des Rotors 3 weist die Abschnitte I und II auf. Die Magneten erstrecken sich in ihrer Anordnung über diese beiden Abschnitte. Die Ausnehmungen 310 - 313 in Abschnitt I und die Ausnehmungen 320 - 327 in Abschnitt II sind unregelmäßig entlang des Umfangs angeordnet und sind verschieden in ihrer Verteilung. Die Formen der Ausnehmungen 310 - 327 sind verschieden zueinander. Die Ausnehmungen 310 - 327 sind im wesentlichen parallel zur Drehachse des Rotors 3 angeordnet.

Die unterschiedlichen Abschnitte können genutzt werden, um unterschiedliche Rastmomentordungen zu reduzieren. Dadurch werden pro Abschnitt mit einem Ausnehmungsmuster bestimmte Rastmomentordungen reduziert, die sich vorzugsweise von denen des anderen Abschnitts unterscheiden. Auf diese Weise können einfach mehrere Rastmomentordungen reduziert werden, welche, wenn die Ausnehmungen in einem Abschnitt zusammengefasst wären, ein schwierig herzustellendes Ausnehmungsmuster ergeben würden. Die Auslegung der Ausnehmungen erfolgt für jeden Abschnitt separat in einem iterativen, mehrmaligem Rechen- und Testprozess.

Dem Fachmann ist selbstverständlich geläufig, dass die Erfindung nicht auf die dargestellten Ausführungsbeispiele beschränkt ist. Vielmehr können bei der Umsetzung der Erfindung Modifikationen und Änderungen im Rahmen der augefügten Ansprüche vorgenommen werden, ohne die Erfindung an sich wesentlich zu verändern. Die vorstehende Beschreibung ist daher nicht als beschränkend, sondern als erläuternd anzusehen.

## Patentansprüche

1. Elektrische Maschine, enthaltend einen Rotor (3) und einen Stator (4), wobei in der Umfangsfläche des Rotors (3) und/oder des Stators (4) zumindest zwei Ausnehmungen (300, 301) angeordnet sind, welche eine Störung des magnestischen Flusses im Rotor (3) und/oder im Stator (4) bewirken, und wobei die Ausnehmungen (300, 301) entlang des Umfangs des Rotors (3) und/oder des Stators (4) unregelmäßig verteilt sind, **dadurch gekennzeichnet, dass** die Umfangsfläche des Rotors (3) und/oder des Stators (4) zumindest einen ersten Abschnitt (I) aufweist, in welchem die Ausnehmungen (310-313) eine unregelmäßige erste Verteilung aufweisen und zumindest einen zweiten Abschnitt (II), in welchem die Ausnehmungen (320-327), eine unregelmäßige zweite Verteilung aufweisen, welche von der ersten Verteilung verschieden ist.

2. Elektrische Maschine nach Anspruch 1, **dadurch gekennzeichnet, dass** wenigstens zwei Ausnehmungen (300, 301) eine unterschiedliche Form aufweisen.

3. Elektrische Maschine nach Anspruch 1, **dadurch gekennzeichnet, dass** die Ausnehmungen (300, 301) identisch ist.

4. Elektrische Maschine nach einem der Ansprüche 0 bis 3, **dadurch gekennzeichnet, dass** mindestens eine Ausnehmung (300,301) als Nut ausgeführt ist.

5. Elektrische Maschine nach einem der Ansprüche 1 bis 4, **dadurch gekennzeichnet, dass** zumindest eine Ausnehmung (300, 301) als Hohlraum im Rotor (3) und/oder Stator (4) ausgeführt ist.

6. Elektrische Maschine nach einem der Ansprüche 1 bis 4, **dadurch gekennzeichnet dass**, die Ausnehmungen (300, 301) im Rotor (3) und/oder Stator (4) ein Füllmaterial enthalten

7. Elektrische Maschine nach Anspruch 6, **dadurch gekennzeichnet, dass** das Füllmaterial ein diamagnetisches oder ein paramagnetisches Material enthält.

8. Elektrische Maschine nach einem der Ansprüche 1 bis 6, **dadurch gekennzeichnet, dass** die Ausnehmungen (300. 301) im wesentlichen parallel zur Drehachse des Rotors (3) angeordnet sind.

9. Verfahren zur Herstellung eines Rotors und/oder Stators einer elektrischen Maschine nach einem der Ansprüche 1 bis 8 mittels eines Mehrkomponenten-Spritzgussverfahrens.

## Claims

1. Electrical machine containing a rotor (3) and a stator (4), with at least two recesses (300, 301) being arranged in the circumferential surface of the rotor (3) and/or of the stator (4), the said recesses causing a disturbance in the magnetic flux in the rotor (3) and/or in the stator (4), and with the recesses (300, 301) being irregularly distributed along the circumference of the rotor (3) and/or of the stator (4), **characterized in that** the circumferential surface of the rotor (3) and/or of the stator (4) has at least one first section (I), in which the recesses (310-313) have an irregular first distribution, and at least one second section (II), in which the recesses (320-327) have an irregular second distribution which differs from the first distribution.

2. Electrical machine according to Claim 1, **characterized in that** at least two recesses (300, 301) have a different shape.

3. Electrical machine according to Claim 1, **characterized in that** the recesses (300, 301) are identical.

4. Electrical machine according to one of Claims 1 to 3, **characterized in that** at least one recess (300, 301) is designed as a slot.

5. Electrical machine according to one of Claims 1 to 4, **characterized in that** at least one recess (300, 301) is designed as a hollow space in the rotor (3) and/or stator (4).

6. Electrical machine according to one of Claims 1 to 4, **characterized in that** the recesses (300, 301) in the rotor (3) and/or stator (4) contain a filling material.

7. Electrical machine according to Claim 6, **characterized in that** the filling material contains a diamagnetic or a paramagnetic material.

8. Electrical machine according to one of Claims 1 to 6, **characterized in that** the recesses (300, 301) are arranged substantially parallel to the rotation axis of the rotor (3).

9. Method for producing a rotor and/or stator of an electrical machine according to one of Claims 1 to 8 by means of a multi-component injection-moulding method.

## Revendications

1. Machine électrique, contenant un rotor (3) et un stator (4), au moins deux évidements (300, 301) étant disposés dans la surface périphérique du rotor (3) et/ou du stator (4), lesquels provoquent une perturbation du flux magnétique dans le rotor (3) et/ou le stator (4), et les évidements (300, 301) étant répartis de manière irrégulière le long de la périphérie du rotor (3) et/ou du stator (4), **caractérisée en ce que** la surface périphérique du rotor (3) et/ou du stator (4) présente au moins une première portion (I) dans laquelle les évidements (310-313) présentent une première répartition irrégulière et au moins une deuxième portion (II) dans laquelle les évidements (320-327) présentent une deuxième répartition irrégulière, qui est différente de la première répartition.

2. Machine électrique selon la revendication 1, **caractérisée en ce qu'**au moins deux évidements (300, 301) présentent une forme différente.

3. Machine électrique selon la revendication 1, **caractérisée en ce que** les évidements (300, 301) sont identiques.

4. Machine électrique selon l'une quelconque des revendications 1 à 3, **caractérisée en ce qu'**au moins un évidement (300, 301) est réalisé sous forme de rainure.

5. Machine électrique selon l'une quelconque des revendications 1 à 4, **caractérisée en ce qu'**au moins un évidement (300, 301) est réalisé sous forme de cavité dans le rotor (3) et/ou le stator (4).

6. Machine électrique selon l'une quelconque des revendications 1 à 4, **caractérisée en ce que** les évidements (300, 301) dans le rotor (3) et/ou le stator (4) contiennent un matériau de remplissage.

7. Machine électrique selon la revendication 6, **caractérisée en ce que** le matériau de remplissage contient un matériau diamagnétique ou un matériau paramagnétique.

8. Machine électrique selon l'une quelconque des revendications 1 à 6, **caractérisée en ce que** les évidements (300, 301) sont disposés essentiellement parallèlement à l'axe de rotation du rotor (3).

9. Procédé de fabrication d'un rotor et/ou d'un stator d'une machine électrique selon l'une quelconque des revendications 1 à 8, au moyen d'un procédé de moulage par injection à plusieurs composants.
